# EUROPÄISCHE PATENTSCHRIFT

(11) **EP 0 807 605 B1**
(45) Veröffentlichungstag und Bekanntmachung des Hinweises auf die Patenterteilung: **22.11.2000**
(21) Anmeldenummer: 97890086.8
(22) Anmeldetag: 13.05.1997
(51) Int. Cl.: C02F 1/42, B01J 47/02, B01J 47/00

(54) **Gerät zum Entsalzen und Aufbereiten von Wasser**
Device for desalinating and treating water
Dispositif pour le dessalage et le traitement d'eau

(30) Priorität: 14.05.1996 AT 28096 U
(43) Veröffentlichungstag der Anmeldung: 19.11.1997
(73) Patentinhaber: Charmilles . Zubehör . Ersatzteile Vertriebsgesellschaft mbH, 2000 Stockerau (AT)
(72) Erfinder: Freudenthaller, Stefan, 2120 Wolkersdorf (AT)
(74) Vertreter: Casati, Wilhelm, Dipl.-Ing.

(56) Entgegenhaltungen:
- DE-A- 1 932 205
- DE-A- 2 207 829
- DE-A- 4 034 269
- FR-A- 2 200 202
- US-A- 3 174 623

## Beschreibung

Die Erfindung bezieht sich auf ein Gerät zum Entsalzen und Aufbereiten von Wasser, insbesondere Brauchwasser von Elektroerosionsmaschinen, bei welchem zwei Ionentauschersäulen hintereinandergeschaltet sind, von welchen die eine mit Anionentauschharz und die andere mit Kationentauschharz gefüllt ist, wobei innerhalb der Säulen bis zum Boden reichende, mit einem Siebabschluß versehene Senkrohre vorgesehen sind.

Beim Betrieb von Elektroerosionsmaschinen ist es notwendig, daß das im Prozeß eingesetzte Wasser einen möglichst geringen Leitwert besitzt. Bisher sind zur Leitwertverringerung als tranportable Einheiten lediglich Mischbettharzanlagen in Verwendung, bei welchen in einer Säule ein sowohl Kationen als auch Anionen entfernendes Mischharz eingefüllt ist, welches, wenn überhaupt wirtschaftlich vertretbar, nur sehr schwer zu regenerieren ist, da vor der Regenerierung das Mischharz in seine zwei Komponenten getrennt werden muß. Anlagen mit zwei getrennten Säulen sind bisher nur als stationäre Anlagen in Verwendung, was bedeutet, daß die Maschine, die mit entsalztem Wasser zu versorgen ist, während der Regenerierung der Entsalzerharze nicht betrieben werden kann.

Es sind bereits Vorrichtungen zum Reinigen und Entgiften einer Flüssigkeit bekannt, bei welcher wenigstens zwei Ionentauschersäulen hintereinandergeschaltet sind, von welchen die eine mit Anionentauschharz und die andere mit Kationentauschharz gefüllt ist, wobei innerhalb der Säulen bis zum Boden reichende, mit einem Siebabschluß versehene Senkrohre vorgesehen sind. Eine solche Anlage geht z.B. aus DE 19 32 205 A1 hervor, wobei es sich bei dieser Anlage um eine stationäre Anlage handelt, bei welcher in einem Gebäude einzelne Säulen aufgestellt sind, die über spezielle Armaturen und Pumpen angesteuert werden. Bei dieser bekannten Ausbildung werden die Säulen von oben nach unten durchflossen, was den Nachteil hat, daß sich an der Oberseite infolge des Ausgasens der Ionentauscherharze Gaspolster bilden können, welche im Falle der genannten bekannten Ausbildung über entsprechende Entlüftungseinrichtungen abgeführt werden müssen. Dies erfordert einen entsprechenden Aufbau des Säulenkopfes, wobei verhindert werden muß, daß über die Entlüftungseinrichtung allenfalls Flüssigkeit austreten kann.

Gemäß DE 22 07 829 A1 ist ein Kleingerät zur Gewinnung von vollentsalztem Wasser vorgesehen, bei welchem ebenfalls zwei Ionentauschersäulen hintereinandergeschaltet sind, jedoch sind dort keine bis zum Behälterboden reichende Senkrohre vorgesehen. Die beiden Säulen sind am oberen Ende über eine Verbindungsöffnung miteinander verbunden, wobei die erste Säule von unten nach oben und die zweite von oben nach unten durchflossen ist. Dies ergibt die bereits oben erwähnten Nachteile der Bildung von Gaspolster im oberen Bereich der Säulen, wobei eine Regeneration der Harze innerhalb der Säulen nur dann erfolgen kann, wenn - wie die zweite Ausführungsvariante dieser bekannten Ausbildung zeigt - am oberen Ende der Säulen spezielle Einfüllöffnungen zur Durchleitung von Regenerationsflüssigkeit vorgesehen sind. Bei beiden beschriebenen bekannten Ausbildungen ist der Wechsel des Ionentauschmaterials insoferne schwierig, als nur kleine Öffnungen zur Verfügung stehen, durch welche einerseits das gebrauchte Harz entfernt und neues Harz einzubringen ist.

Schließlich ist noch eine Ausführungsvariante einer Vorrichtung zur Reinigung und Neutralisation von Abgaskondensaten bekannt, nämlich in DE 40 34 269 A1, welche keine hintereinander geschalteten Ionentauschersäulen aufweist, sondern bei einer Ausführungsvariante übereinanderliegende Ringe besitzt, die durch poröse Böden voneinander getrennt sind und bei welchen auf einem Boden ein Kationenaustauscherharz und auf dem anderen Boden ein Aktivkohlefilter vorgesehen ist. Bei der weiteren, in dieser Druckschriften beschriebenen Ausführungsvariante ist ein Behälter, der mit Ionentauscherharz gefüllt ist, vorgesehen, dem ein mit Aktivkohle gefülltes Absetzbecken vorgeschaltet ist.

Der Erfindung liegt die Aufgabe zugrunde ein Gerät der eingangs genannten Art zu schaffen, welches transportabel ist, und dessen Harze leicht zu regenerieren sind.

Diese Aufgabe wird erfindungsgemäß dadurch gelöst, daß die beiden Ionentauschersäulen in einem gemeinsamen, dicht verschlossenen Gehäuse angeordnet sind, wobei aus dem Gehäuse die Anschlüsse für die Zuleitung und die Ableitung jeder Säule dicht herausgeführt sind, wobei die Zuleitung jeder Säule an das Senkrohr angeschlossen ist, und wobei ein abnehmbares Verbindungsrohr zwischen Ableitung der ersten Säule und Zuleitung der folgenden Säule vorgesehen ist. Dadurch ist es möglich, verbrauchte Geräte einfach auszutauschen und zu einer Regenerationsanlage zu transportieren, wo dann die Verbindungsleitung zwischen den beiden Säulen abgenommen wird und die Säulen getrennt an die Regenerationsanlage angeschlossen werden. Nach Beendigung der Regeneration der beiden Säulen werden sie wieder miteinander in Serie geschaltet, sodaß dann das Gerät wieder einsatzbereit ist.

Vorteilhafterweise kann je Säule die Zuleitung samt angeschlossenem Senkrohr und die Ableitung auf einem gemeinsamen Kopf angeordnet sein, Damit ist das Säuleninnere leicht zugänglich, ohne die Säule aus dem Gerät ausbauen zu müssen, was vor allem dann günstig ist, wenn die Harzfüllung zu tauschen ist.

Für ein gleichmäßiges Abziehen der Flüssigkeit kann in dem die Säule abschließenden Kopf ein die Zuleitung konzentrisch umgebender Ringkanal vorgesehen sein, von welchem die Ableitung ausgeht und der zum Inneren der Säule hin offen ist. Dadurch wird der Flüssigkeit die Möglichkeit gegeben, flächenmäßig aus der Säule auszutreten, was einen gleichmäßigen Durchsatz der Flüssigkeit durch die Säule auch im oberen Bereich derselben gewährleistet. Um auch im Bereich des Kopfes der Säule Toträume zu vermeiden, kann dem Ringkanal ein mit radial gerichteten Einlaßkanälen bzw. -schlitzen vesehener, das Senkrohr konzentrisch umgebender Sammelkopf vorgeschaltet sein. Auch beim Sammelkopf können zur Verbesserung der Strömungsverhältnisse die Einlaßkanäle bzw. -schlitze in mehreren Ebenen höhenmäßig versetzt angeordnet sein, wobei sich der Durchmesser des Sammelkopfes stufenförmig von Ebene zu Ebene verringert.

Für ein leichtes Öffnen der Säule und für hohe Dichtheit auch bei höheren Arbeitsdrücken kann der Kopf über an einer zylindrischen Außenmantelfläche angeordnete Dichtringe gegen eine zylindrische Innemantelfläche der Säule abgedichtet sein und lokale, radial vorspringende Ansätze aufweisen, die durch Drehen des Kopfes um seine Mittelachse unter entsprechende, am oberen Ende der Säule angeordnete Haltevorsprünge bewegbar sind.

In der Zeichnung ist ein Ausführungsbeispiel des erfindungsgemäßen Gerätes wiedergegeben.

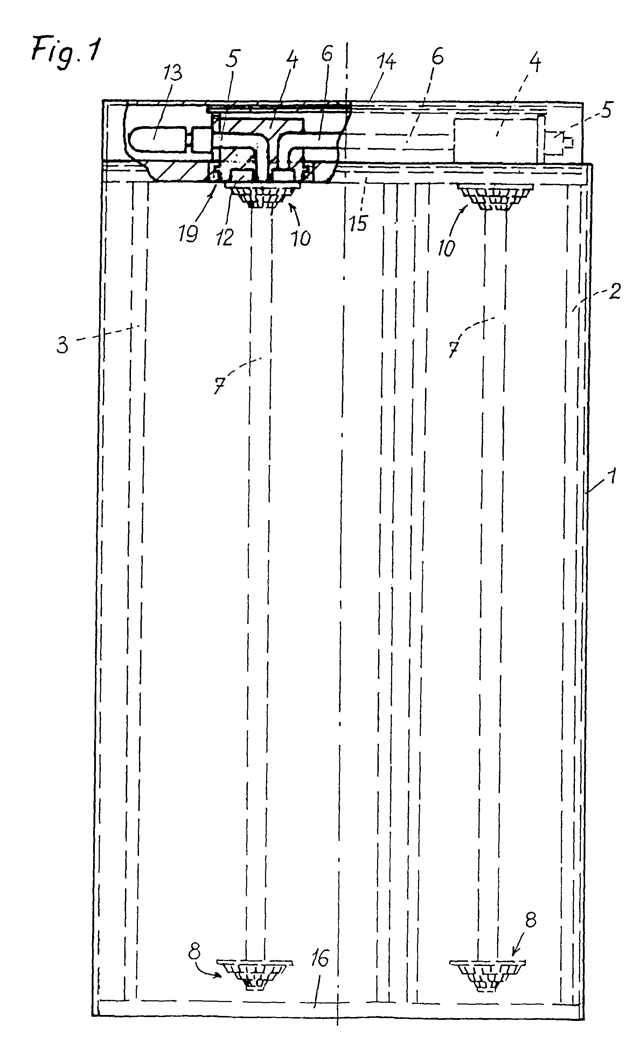

Fig. 1 zeigt eine teilweise geschnittene Seitenansicht des Gerätes.

Fig. 2 gibt in größerem Maßstab den in die Säule einzusetzenden Kopf wieder, wobei der Mittelteil des Senkrohres herausgeschnitten ist.

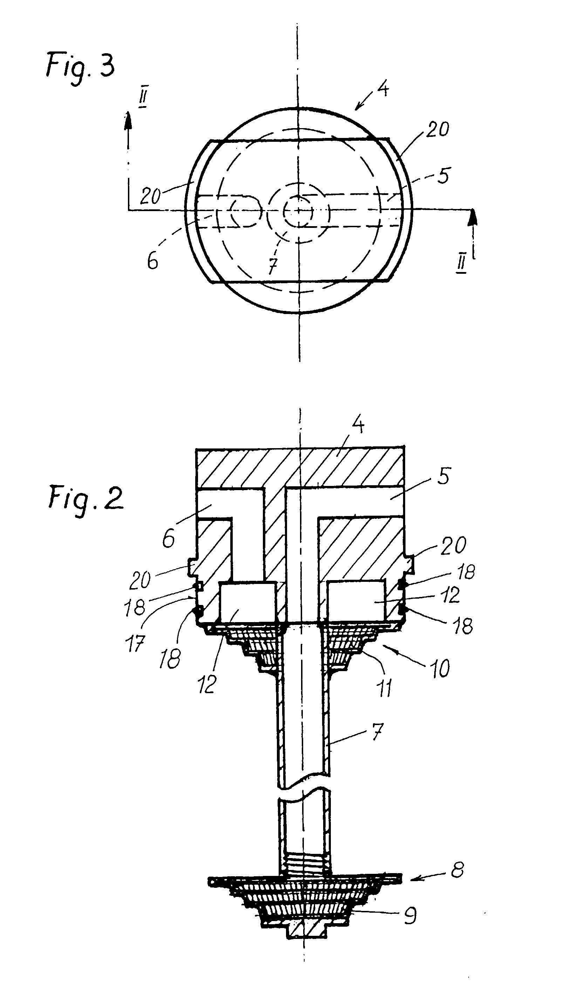

Fig. 3 veranschaulicht eine Draufsicht auf den Kopf gemäß Fig. 2.

Fig. 4 stellt eine Draufsicht auf das Gerät bei abgenommenem Deckel im Arbeitszustand,

Fig. 5 in Regenerationszustand dar.

In einem vorliegend rechteckigen Grundriß aufweisenden Gehäuse 1 sind zwei Säulen 2 und 3 angeordnet, von denen die in Fließrichtung während des Arbeitszyklus vorne liegende Säule 2 mit Kationentauschharz und die in Fließrichtung hinten liegende Säule 3 mit Aniontauschharz gefüllt ist. Die Säulen 2 und 3 bestehen aus einer zylindrischen Wandung, die am unteren Ende durch den Boden 16 des Gehäuses 1 und am oberen Ende durch die obere Abschlußwand 15 des Gehäuses 1 abgeschlossen sind. Die obere Abschlußwand 15 weist im Bereich der Säulen, konzentrisch zu diesen je eine Ausnehmung 19 auf, in die ein die Säule verschließender Kopf 4 eingesetzt ist. Jeder Kopf 4 ist mit einer Zuleitung 5 für das zu behandelnde Wasser und mit einer Ableitung 6 für das behandelte Wasser versehen. Konzentrisch zum Kopf schließt an die Zuleitung 5 ein Senkrohr 7 an, das bis zum Boden 16 der Säule 2 bzw. 3 reicht. Am unteren Ende des Senkrohres 7 ist ein Verteilerkopf 8 angebracht, in welchen das Senkrohr 7 ausmündet und welcher Auslaßkanäle bzw. -schlitze 9 zum Ausbringen der zu behandelnden Flüssigkeit in die Säule aufweist. Dies ergibt ein gleichmäßiges Durchströmen des Harzes, wobei Toträume vermieden sind.

Der Kopf 4 ist weiters mit einem das Senkrohr konzentrisch umgebenden Ringkanal 12 versehen, von welchem die Ableitung 6 ausgeht. Diesem Ringkanal 12 ist ein Sammelkopf 10 vorgeschaltet, der mit radial gerichteten Einlaßkanälen bzw. -schlitzen 11 versehen ist. Durch diesen Sammelkopf 10 ist das Senkrohr 7 dicht durchgeführt.

Sowohl beim Verteilerkopf 8 als auch beim Sammelkopf 10 sind die Kanäle bzw. Schlitze 9 bzw. 11 in mehreren Ebenen übereinander, also höhenmäßig versetzt, angeordnet, wobei sich der Durchmesser des Verteilerkopfes 8 bzw. des Sammelkopfes 10 stufenmäßig von Ebene zu Ebene nach unten verringert. Dies bewirkt, daß die eintretende Flüssigkeit auch im Bereich des Bodens zuverlässig nach außen geführt wird, was die Ausbildung von Toträumen, insbesondere auch im Bereich des Überganges zwischen dem Boden und der zylindrischen Wandung der Säule, verhindert.

Der Kopf 4 weist in dem in die Ausnehmung 19 der oberen Abschlußwandung 15 eingesetzten Bereich eine äußere zylindrischen Wandung 17 auf, welche mit Dichtringen 18 versehen ist, die sich an die zylindrische Innenwandung der Ausnehmung 19 dicht anlegen. An der äußeren Zylinderwandung 17 sind außerdem noch radial abstehende Ansätze 20 lokal vorgesehen, welche mit Haltevorsprüngen 21 zusammenwirken, die von einem zylindrischen, konzentrisch angeordneten Haltering 22 nach innen vorspringen. Zwischen den Haltevorsprüngen 21 sind Ausnehmungen 23 vorgesehen, deren Umfangserstreckung größer ist als die der Ansätze 20, sodaß der Kopf 4 mit den Ansätzen 20 zwischen den Haltevorsprüngen 21 durch die Ausnehmungen 23 hindurch in die Ausnehmung 19 der oberen Abschlußwandung 15 einsetzbar und durch Verdrehen und damit Bewegen der Ansätze 20 unter die Haltevorsprünge 21 in der Ausnhmung 19 festlegbar ist.

Die Ableitung 6 der Kationensäule 2 ist mit der Zuleitung 5 der Anionensäule 3 über einen Krümmer 13 verbunden, welcher z.B. über Steckkupplungen leicht abnehmbar ist.

Die Köpfe 4 sowie die Zu- und Ableitungen derselben und der Verbindungskrümmer sind im Betriebszustand des Gerätes mittels eines Deckel 14 abgedeckt, wobei dann lediglich der Einlaß 24 und der Auslaß 25 des Gerätes außen sichtbar und zugänglich sind.

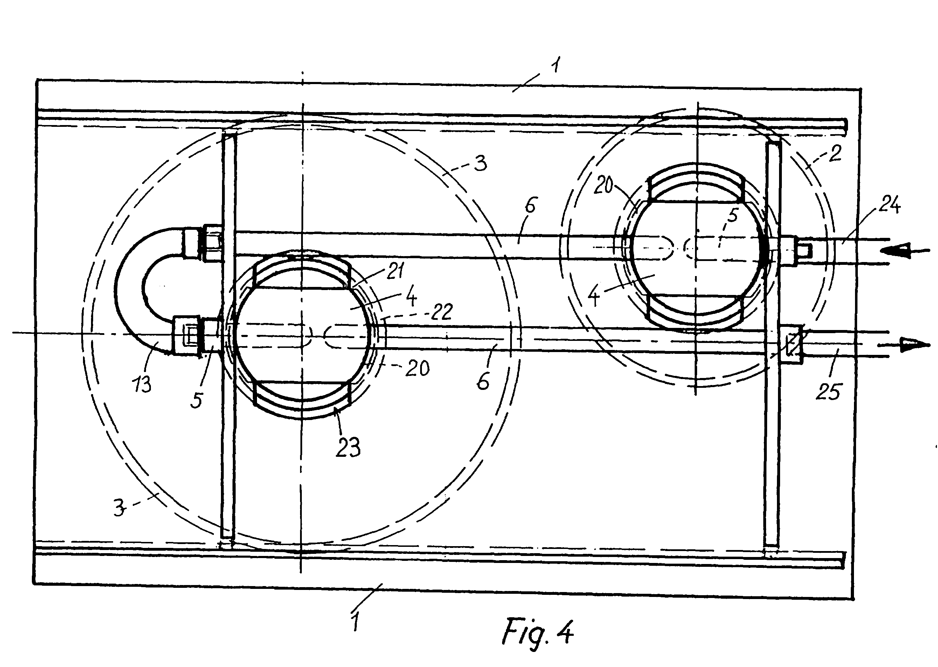

Bei Betrieb des Gerätes (siehe Fig. 4) wird die zu behandelnde Flüssigkeit über den Einlaß 24 der Zuleitung 5 des Kopfes 4 der Kationensäule 2 zugeführt, von wo sie durch das Senkrohr 7 nach unten zum Verteilerkopf 8 fließt. Dieser verteilt die Flüssigkeit über die Auslaßschlitze 9 gleichmäßig über den gesamten Querschnitt der Säule 2. Die Flüssigkeit steigt nun langsam in der Säule empor und gibt die Kationen an das Harz in der Säule 2 ab. Am oberen Ende der Säule strömt dann die von Kationen befreite Flüssigkeit über die Einlaßschlitze 11 des Sammelkopfes 10 in diesen ein und gelangt in den Ringkanal 12, aus dem sie durch die Ableitung 6 abgeführt wird.

Die von den Kationen befreite Flüssigkeit gelangt über den Verbindungskrümmer 13 in die Zuleitung 5 des Kopfes 4 der Anionensäule 3 und durchströmt diese in gleicher Weise wie die Kationensäule. Das so behandelte Wasser kann nun wieder in den Produktionsprozeß, z.B. dem Elektroerodieren, eingeführt werden.

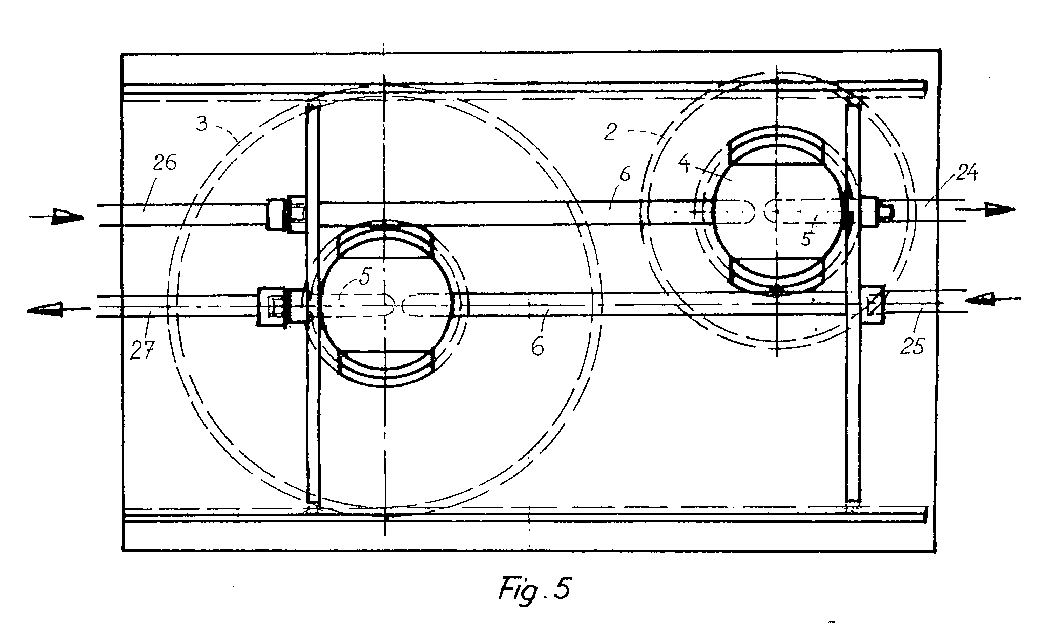

Wenn die Harze auf Grund ihrer Beladung mit Kationen und Anionen regeneriert werden müssen, dann wird das Gerät von der Werkzeugmaschine abgeschlossen und ein mit regeneriertem Harz gefülltes Austauschgerät angeschlossen. Das mit verbrauchtem Harz gefüllte Gerät wird zur Regenerationsstelle transportiert, welche von der Produktionsstätte entfernt sein kann. Das mit dem zu regenerierenden Harz gefüllte Gerät wird durch Abnahme des Deckels 14 geöffnet. Danach wird der Verbindungskrümmer 13 abgenommen und das Gerät wird wie in Fig. 5 wiedergegeben an die Regenerationsstation angeschlossen. Es wird dann über die Regenerationsleitung 26 Regenerationsflüssigkeit von oben über den Sammelkopf 10 auf das Harz der Kationensäule 2 aufgebracht und in der Säule nach unten zum Verteilerkopf 8 geführt, wonach die Regenerationsflüssigkeit die Säule über das Senkrohr 7, die Zuleitung 5 des Kopfes 4 und den Einlaß 24 des Gerätes verläßt. Die Anionensäule 3 wird über den Auslaß 25 des Gerätes mit Regenerationsflüssigkeit beschickt, welche die Säule 3 in der gleiche Weise wie anhand der Kationensäule 2 beschrieben durchströmt. Die verbrauchte Regenerationsflüssigkeit der Anionensäule 3 wird über die Ableitung 27 abgeführt.

In beiden Säulen wird die restliche Regenerationsflüssigkeit dadurch entfernt, daß anstelle der Regenerationsflüssigkeit nach Beendigung der Regeneration ein Druckgas in gleicher Weise wie die Regenerationsflüssigkeit durch die Säulen geführt wird, wodurch durch das Druckgas die Flüssigkeit über das Senkrohr herausgepreßt wird. Aufgrund der Ausbildung des Verteilerkopfes, der in der Regenerationsphase als Sammelkopf wirkt, wird sichergestellt, daß die gesamte Flüssigkeit aus der Säule herausgedrückt wird.

Zum Austausch von nicht mehr regenerierbarem Harz wird der Kopf 4 nach Abnehmen der Zuleitung 5 und der Ableitung 6 durch Drehen um die zentrale Achse aus der Ausnehmung 19 in der oberen Abschlußwandung des Gehäuses 1 und der jeweiligen Säule 2 bzw. 3 herausgezogen, wonach dann ein Saugrohr eingeführt werden kann, mit welchem das verbrauchte Harz aus der Säule abgezogen werden kann. Nach Einfüllen des neuen Harzes und eventueller Aktivierung desselben ist nach Einsetzen des Kopfes 4 die Säule wieder betriebsbereit.

Die Erfindung bietet zusamengefaßt noch die Möglichkeit einen Durchsatz von bis zu 30 l/min zu erreichen, da ein Betriebsdruck von etwa 6 bar möglich ist. Trotz des hohen Durchsatzes ist ein Leitwert des Wassers von 0,5 µS und darunter erreichbar. Außerdem ist das Gerät ohne Probleme transportierbar, da es auf Grund des dichten Gehäuses praktisch ein Doppelwandgefäß bildet, weil das Gehäuse 1 als Auffangraum für eine eventuell undichte Säule wirkt, sodaß allfällig aus der Säule ausgetretene Flüssigkeit, die noch mit Metallen aus der Elektroerosion kontaminiert sein kann, sicher vor unkontrolliertem Auslaufen zurückgehalten wird.

## Patentansprüche

1. Gerät zum Entsalzen und Aufbereiten von Wasser, insbesondere Brauchwasser von Elektroerosionsmaschinen, bei welchem zwei Ionentauschersäulen hintereeinandergeschaltet sind, von welchen die eine mit Anionentauschharz und die andere mit Kationentauschharz gefüllt ist, wobei innerhalb der Säulen bis zum Boden reichende, mit einem Siebabschluß versehene Senkrohre vorgesehen sind, dadurch gekennzeichnet, daß die beiden Ionentauschersäulen (2, 3) in einem gemeinsamen, dicht verschlossenen Gehäuse (1) angeordnet sind, wobei aus dem Gehäuse (1) die Anschlüsse für die Zuleitung (5) und die Ableitung (6) jeder Säule (2, 3) dicht herausgeführt sind, wobei die Zuleitung jeder Säule (2, 3) an das Senkrohr (7) angeschlossen ist, und wobei ein abnehmbares Verbindungsrohr (13) zwischen Ableitung (6) der ersten Säule (2) und Zuleitung (5) der folgenden Säule (3) vorgesehen ist.

2. Gerät nach Anspruch 1, dadurch gekennzeichnet, daß je Säule (2, 3) die Zuleitung (5) samt angeschlossenem Senkrohr (7) und die Ableitung (6) auf einem gemeinsamen Kopf (4) angeordnet ist.

3. Gerät nach Anspruch 1 oder 2, dadurch gekennzeichnet, daß in dem die Säule (2, bzw. 3) abschließenden Kopf (4) ein die Zuleitung (5) konzentrisch umgebender Ringkanal (12) vorgesehen ist, von welchem die Ableitung (6) ausgeht und der zum Inneren der Säule hin offen ist.

4. Gerät nach Anspruch 3, dadurch gekennzeichnet, daß dem Ringkanal ein mit radial gerichteten Einlaßkanälen bzw. -schlitzen (11) versehener, das Senkrohr (7) konzentrisch umgebender Sammelkopf (10) vorgeschaltet ist.

5. Gerät nach Anspruch 4, dadurch gekennzeichnet, daß die Einlaßkanäle bzw. -schlitze (11) in mehreren Ebenen höhenmäßig versetzt angeordnet sind, wobei sich der Durchmesser des Sammelkopfes (10) stufenförmig von Ebene zu Ebene nach unten verringert.

6. Gerät nach einem der Ansprüche 1 bis 5, dadurch gekennzeichnet, daß der Kopf (4) über an einer zylindrischen Außenmantelfläche (17) angeordnete Dichtringe (18) gegen eine zylindrische Innemantelfläche der Säule (2 bzw. 3) abgedichtet ist und lokale, radial vorspringende Ansätze (20) aufweist, die durch Drehen des Kopfes (4) um seine Mittelachse unter entsprechende, am oberen Ende der Säule (2, bzw.3) angeordnete Haltevorsprünge (21) bewegbar sind.

## Claims

1. An apparatus for desalinating and treating water, particularly used water from electroerosion machines, in which two ion exchanger columns are serially connected, one of which is filled with anion exchange resin while the other is filled with cation exchange resin, gravity tubes provided with a screen closure being provided inside the columns and extending as far as the bottom, characterised in that the two ion exchanger columns (2, 3) are disposed in a common tightly closed housing (1), the connections for the feed line (5) and discharge line (6) from each column (2, 3) being passed in sealing-tight manner out of the housing (1), the feed line for each column (2, 3) being connected to the gravity pipe (7) and a removable connecting pipe (13) being provided between the discharge line (6) of the first column (2) and the feed line (5) of the subsequent column (3).

2. An apparatus according to claim 1, characterised in that for each column (2, 3) the feed line (5) together with the connected gravity pipe (7) and the discharge line (6) is disposed on a common head (4).

3. An apparatus according to claim 1 or 2, characterised in that there is in the head (4) which closes off the column (2, 3) an annular duct (12) concentrically enclosing the feed line (5) and from which the discharge line (6) emerges and which is open towards the interior of the column.

4. An apparatus according to claim 3, characterised in that the annular duct is preceded by a manifold (10) concentrically enclosing the gravity pipe (7) and provided with radially directed inlet passages or slots (11).

5. An apparatus according to claim 4, characterised in that the inlet passages or slots (11) are disposed at a plurality of levels offset in height, the diameter of the manifold (10) diminishing in stepwise manner downwards from level to level.

6. An apparatus according to one of claims 1 to 5, characterised in that the head (4) is sealed in respect of a cylindrical inner shell of the column (2, 3) by gaskets disposed on a cylindrical outer shell (17), and has local radially projecting portions (20) adapted to be moved by rotation of the head (4) about its central axis and under matching retaining projections (21) disposed at the upper end of the column (2, 3).

## Revendications

1. Dispositif pour dessaler et traiter de l'eau, notamment des eaux usées de machines pour électro-érosion, dans lequel deux colonnes d'échange d'ions sont montées l'une derrière l'autre, dont l'une est remplie de résine d'échange d'ions et l'autre, de résine d'échange de cations, des tubes descendants étant prévus à l'intérieur des colonnes qui s'étendent jusqu'au fond et qui sont pourvus d'une fermeture filtrante, caractérisé en ce que les deux colonnes d'échange d'ions (2, 3) sont disposées dans un boîtier (1) commun, fermé de manière étanche, les raccords pour l'arrivée (5) et le départ (6) de chaque colonne (2, 3) étant guidés de manière étanche à l'extérieur du boîtier (1), l'arrivée de chaque colonne (2, 3) étant raccordée au tube descendant (7), et un tube de liaison (13) amovible étant prévu entre le départ (6) de la première colonne (2) et l'arrivée (5) de la colonne (3) suivante.

2. Dispositif selon la revendication 1, caractérisé en ce que pour chaque colonne (2, 3) l'arrivée (5) avec le tube descendant (7) raccordé, et le départ (6) sont disposés sur une tête (4) commune.

3. Dispositif selon la revendication 1 ou 2, caractérisé en ce que dans la tête (4) qui ferme la colonne (2 ou 3), il est prévu un canal annulaire (12), entourant concentriquement l'arrivée (5), duquel part le départ (6) et qui est ouvert vers l'intérieur de la colonne.

4. Dispositif selon la revendication 3, caractérisé en ce qu'une tête collectrice (10), qui est pourvue de canaux ou fentes d'entrée (11) et qui entoure concentriquement le tube descendant (7), est placée devant le canal annulaire.

5. Dispositif selon la revendication 4, caractérisé en ce que les canaux ou fentes d'entrée (11) sont disposés décalés en hauteur dans plusieurs plans, le diamètre de la tête collectrice (10) diminuant progressivement vers le bas, d'une plan à l'autre.

6. Dispositif selon l'une des revendications 1 à 5, caractérisé en ce que la tête (4) est rendue étanche par rapport à une surface d'enveloppe cylindrique intérieure de la colonne (2 ou 3), au moyen de bagues d'étanchéité (18) disposées sur une surface d'enveloppe cylindrique extérieure (17), et en ce qu'elle présente des appendices (20) locaux, faisant saillie radialement, qui sont déplaçables par rotation de la tête (4) autour de son axe médian, au-dessous de saillies de maintien (21) correspondantes, disposées à l'extrémité supérieure de la colonne (2 ou 3).
